# EUROPEAN PATENT APPLICATION

(11) **EP 3 828 500 A1**
(43) Date of publication of application: **02.06.2021**
(21) Application number: 19840889.0
(22) Date of filing: 17.07.2019
(51) Int. Cl.: G01C 19/72

(54) **INTERFEROMETRIC OPTICAL FIBER GYROSCOPE AND SENSING COIL MECHANISM**

(30) Priority: 25.07.2018 JP 2018139195
(71) Applicant: Japan Aerospace Exploration Agency, Tokyo 182-8522 (JP); Optoquest Co., Ltd., Ageo-shi, Saitama, 362-0021 (JP)
(72) Inventor: MITANI, Shinji, Chofu-shi, Tokyo 182-8522 (JP); NIGO, Kenichiro, Chofu-shi, Tokyo 182-8522 (JP); MIZUTANI, Tadahito, Chofu-shi, Tokyo 182-8522 (JP); KARASAWA, Satoshi, Ageo-shi, Saitama 362-0021 (JP); TOTTORI, Yusaku, Ageo-shi, Saitama 362-0021 (JP); TAKAHATA, Taketoshi, Ageo-shi, Saitama 362-0021 (JP); ENDO, Haruyuki, Ageo-shi, Saitama 362-0021 (JP); TAKUSHIMA, Yuichi, Ageo-shi, Saitama 362-0021 (JP); NAKAMURA, Shigeru, Ageo-shi, Saitama 362-0021 (JP)
(74) Representative: Michalski Hüttermann & Partner Patentanwälte mbB
(86) International application number: PCT/JP2019/028146
(87) International publication number: WO 2020/022157

(57) **Abstract**

[Object] To provide an interferometric optical fiber gyroscope that can perform higher-accuracy measurement and can be produced at a low cost.

[Solving Means] An interferometric optical fiber gyroscope is an interferometric optical fiber gyroscope that detects angular velocity by optical interference between counterclockwise light and clockwise light. In such an interferometric optical fiber gyroscope that detects angular velocity by optical interference between counterclockwise light and clockwise light, the interferometric optical fiber gyroscope includes: a sensing coil mechanism including a multicore fiber that includes a plurality of transmission cores, and a multicore fiber optical path junction that optically couples at least a first transmission core and a second transmission core, of the plurality of transmission cores.

## Description

### Technical Field

The present invention relates to an interferometric optical fiber gyroscope and a sensing coil mechanism.

### Background Art

In an interferometric optical fiber gyroscope, light emitted from a light source is divided into two light beams by an optical divider, and phase-modulation for each of the divided light beams is performed by an optical modulator. After that, each of the divided light beams is guided to a sensing coil in which a single-mode fiber is wound symmetrically around a bobbin, travels counterclockwise or clockwise through the sensing coil, then returns to the optical modulator, undergoes phase modulation again by the optical modulator, and is superimposed to interfere with each other. The interfering light is guided to an optical receiver via an optical coupler and converted into an electrical signal by the optical receiver.

When angular velocity is applied to the sensing coil while the light is traveling in the sensing coil, a phase difference occurs between clockwise light and counterclockwise light (Sagnac effect). As a result, the optical receiver is capable of capturing the change in the intensity of the interfering light according to the phase difference, which makes it possible to detect angular velocity.

As a sensing coil of such an interferometric optical fiber gyroscope, a multicore fiber including a plurality of transmission cores has been used recently as an example (see, for example, Patent Literature 1).

### Citation List

### Patent Literature

Patent Literature 1: U.S. Patent No. 8497994B2

### Disclosure of Invention

### Technical Problem

However, the above-mentioned disclosed example is based on symmetrical winding of the multicore fiber, which takes a great deal of time and effort in the winding process. As a result, even if the multicore fiber is applied to the interferometric optical fiber gyroscope, there is a limit to the reduction in costs. Further, if symmetrical winding of the multicore fiber is avoided, the accuracy for detecting angular velocity is poor.

In view of the circumstances as described above, it is an object of the present invention to provide an interferometric optical fiber gyroscope and a sensing coil mechanism that can perform higher-accuracy measurement and can be produced at a low cost. Solution to Problem

In order to achieve the above-mentioned object, an interferometric optical fiber gyroscope according to an embodiment of the present invention is an interferometric optical fiber gyroscope that detects angular velocity by optical interference between counterclockwise light and clockwise light. The interferometric optical fiber gyroscope includes: a sensing coil mechanism including a multicore fiber that includes a plurality of transmission cores, and a multicore fiber optical path junction that optically couples at least a first transmission core and a second transmission core, of the plurality of transmission cores, to form one optical path.

Further, in order to achieve the above-mentioned object, an interferometric optical fiber gyroscope according to an embodiment of the present invention includes: a light source; a first optical divider; a polarizer; a second optical divider; an optical modulator; a sensing coil mechanism; and an optical receiver.

The first optical divider divides light emitted from the light source.

The polarizer makes the light divided by the first optical divider single-polarized.

The second optical divider divides the light that has been made single-polarized by the polarizer into two light beams.

The optical modulator modulates a phase of each of the light beams divided by the second optical divider.

The sensing coil mechanism includes a multicore fiber including a plurality of transmission cores, and an optical input/output device that optically couples arbitrary transmission cores of the multicore fiber to each other, the multicore fiber and the optical input/output device forming one optical path, the light beams whose phases have been modulated by the optical modulator traveling in opposite directions in the optical path as counterclockwise light and clockwise light.

The optical receiver receives light obtained by optical interference via the second optical divider between the counterclockwise light emitted from the sensing coil mechanism and the clockwise light emitted from the sensing coil mechanism.

Further, in order to achieve the above-mentioned object, a sensing coil mechanism according to an embodiment of the present invention is a sensing coil mechanism incorporated in an interferometric optical fiber gyroscope that detects angular velocity by optical interference between counterclockwise light and clockwise light, the sensing coil mechanism including: a multicore fiber that includes a plurality of transmission cores; and a multicore fiber optical path junction that optically couples at least a first transmission core and a second transmission core, of the plurality of transmission cores, to form one optical path. Advantageous Effects of Invention

As described above, in accordance with the present invention, there are provided an interferometric optical fiber gyroscope and a sensing coil mechanism that can perform higher-accuracy measurement and can be produced at a low cost.

### Brief Description of Drawings

[Fig. 1] Fig. 1 is a block configuration diagram of an interferometric optical fiber gyroscope according to this embodiment.
[Fig. 2] Fig. 2 is a block configuration diagram of a sensing coil mechanism according to this embodiment.
[Fig. 3] Fig. 3 is a schematic diagram of a virtual optical system showing a state where light is transmitted in a sensing coil in this embodiment.
[Fig. 4] Fig. 4 is a schematic diagram of a virtual optical system showing combinations of adjacent transmission cores in the sensing coil shown in Fig. 3.
[Fig. 5] Fig. 5 is a schematic diagram of a virtual optical system showing a state where light is transmitted in the sensing coil in this embodiment.
[Fig. 6] Fig. 6 is a schematic diagram of a virtual optical system showing combinations of adjacent transmission cores in the sensing coil shown in Fig. 5.

### Mode(s) for Carrying Out the Invention

Hereinafter, an embodiment of the present invention will be described with reference to the drawings. Further, the same members or members having the same function are denoted by the same reference symbols, and the description thereof is appropriately omitted in some cases after the description of the members.

### (Interferometric optical fiber gyroscope)

First, a basic configuration of an interferometric optical fiber gyroscope according to this embodiment will be described.

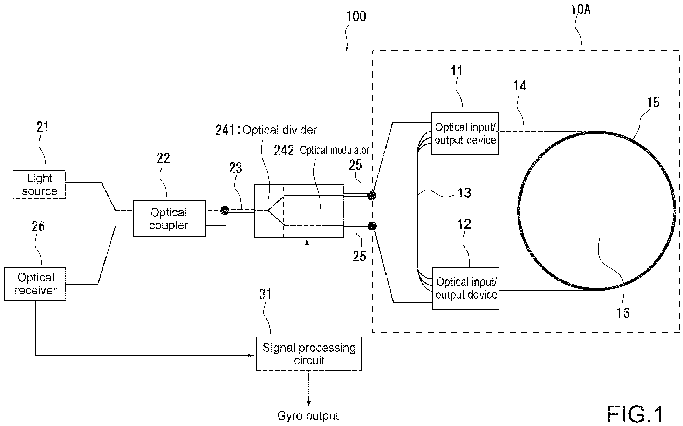

Fig. 1 is a block configuration diagram of an interferometric optical fiber gyroscope according to this embodiment.

An interferometric optical fiber gyroscope 100 shown in Fig. 1 is an interferometric optical fiber gyroscope (I-FOG) that detects angular velocity by using the effect of optical interference between counterclockwise light and clockwise light. The interferometric optical fiber gyroscope 100 includes a light source 21, an optical coupler 22 (first optical divider), a polarizer 23, an optical divider 241 (second optical divider), an optical modulator 242, a depolarizer 25, an optical receiver 26, and a sensing coil mechanism 10A. The sensing coil mechanism 10A includes optical input/output devices 11 and 12, a plurality of single-mode fibers 13, a multicore fiber 14, and a bobbin 16. Further, in the interferometric optical fiber gyroscope 100, the optical coupler 22, the polarizer 23, the optical divider 241, the optical modulator 242, and the depolarizer 25 may be combined into one module.

In the interferometric optical fiber gyroscope 100, light emitted from the light source 21 is divided by the optical coupler 22, a part of the light is introduced into the polarizer 23, and is single-polarized. The single-polarized light is divided into two light beams by the optical divider 241, and each of the divided light beams is phase-modulated by the optical modulator 242. The light beams pass through the depolarizer 25, and are unpolarized and then guided as clockwise light and counterclockwise light via the optical input/output devices 11 and 12 into a sensing coil 15 in which the multicore fiber 14 is wound in a coil shape into the bobbin 16. Note that the depolarizer 25 may be removed as appropriate, and it only needs to provide at least one depolarizer 25 between the optical modulator 242 and the sensing coil mechanism 10A. For example, the depolarizer 25 may be removed from the above-mentioned module to provide a polarization-maintaining multicore fiber. Further, the optical divider 241, the polarizer 23, and the optical modulator 242 may be integrated on one substrate (not shown) and an optical integrated circuit may be formed on this substrate. In this case, the interferometric optical fiber gyroscope 100 becomes small by integrating a plurality of elements, and it is possible to reduce the voltage of the modulating voltage by a Push-Pull phase modulation method by utilizing an optical waveguide.

For example, the clockwise light reaches the optical input/output device 12 after passing through one transmission core (optical fiber) of the multicore fiber 14 included in the sensing coil 15 via the optical input/output device 11. The clockwise light is optically coupled to the single-mode fiber 13 by the optical input/output device 12 and guided to the optical input/output device 11 again. In the optical input/output device 11, the clockwise light is optically coupled to a transmission core different from the transmission core thorough which the clockwise light has previously passed in the multicore fiber 14, and passes through the different transmission core in the multicore fiber 14. By repeating the above-mentioned traveling, the clockwise light sequentially passes through a plurality of transmission cores arranged in the multicore fiber 14, and finally reaches the optical input/output device 12. After that, the clockwise light passes through the depolarizer 25 and the optical modulator 242 in the stated order and reaches the optical divider 241.

The counterclockwise light travels in the direction opposite to the clockwise light in the sensing coil 15. The counterclockwise light passes through one transmission core of the multicore fiber 14 included in the sensing coil 15 via the optical input/output device 12 and then reaches the optical input/output device 11. The counterclockwise light is optically coupled to the single-mode fiber 13 by the optical input/output device 11 and guided to the optical input/output device 12 again. Next, the counterclockwise light is optically coupled to a transmission core different from the transmission core through which the counterclockwise light has previously passed in the multicore fiber 14 and passes through the different transmission core in the multicore fiber 14. By repeating such traveling, the counterclockwise light sequentially passes through a plurality of transmission cores arranged in the multicore fiber 14, and finally reaches the optical input/output device 11. After that, the counterclockwise light passes through the depolarizer 25, the optical modulator 242, and the optical coupler 22 in the stated order and reaches the optical divider 241.

Here, in the sensing coil 15, a transmission core adjacent to the transmission core through which the clockwise light travels is selected as the transmission core through which the counterclockwise light travels.

When the clockwise light emitted from the sensing coil mechanism 10A and the counterclockwise light emitted from the sensing coil mechanism 10A reach the optical divider 241 via the optical modulator 242, they overlap and interfere with each other. The interfering light passes through the polarizer 23 and the optical coupler 22, and the optical receiver 26 receives the interfering light. When the interfering light reaches the optical receiver 26, it is converted into an electrical signal.

When angular velocity is applied to the sensing coil 15 while the clockwise light and the counterclockwise light are passing through the sensing coil 15, a phase difference occurs between the clockwise light and the counterclockwise light, and the intensity of the interfering light changes. When the electrical signal converted by the optical receiver 26 is signal-processed by a signal processing circuit 31, gyro output, i.e., angular velocity, according to the change in the intensity of the interfering light is obtained.

### (Sensing coil mechanism)

Next, the sensing coil mechanism 10A according to this embodiment will be described.

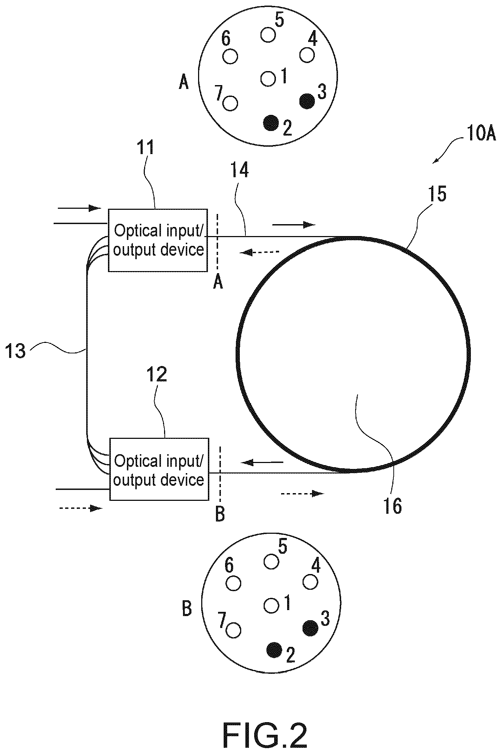

Fig. 2 is a block configuration diagram of a sensing coil mechanism according to this embodiment.

In Fig. 2, the clockwise light is schematically indicated by a solid arrow, and the counterclockwise light is indicated by a broken arrow. Further, a cross-sectional view of the multicore fiber 14 taken along the section plane A is shown on the upper side of the sensing coil mechanism 10A in Fig. 2, and a cross-sectional view of the multicore fiber 14 taken along the section plane B is shown on the lower side.

As shown in Fig. 2, the multicore fiber 14 includes a plurality of transmission cores 1 to 7. For example, the transmission core 1 is located at the center of the multicore fiber 14, and the transmission cores 2 to 7 are arranged around the transmission core 1. Here, the transmission core 1 is a central core, and the transmission cores 2 to 7 are each a peripheral core. Each of intervals between the transmission cores 1 to 7 is, for example, an equal interval. For example, a resin is filled between the transmission cores 1 to 7, and the transmission cores 1 to 7 are arranged in a resin layer having a circular outer shape of a cross section, for example.

In the sensing coil mechanism 10A, at least two transmission cores, of the plurality of transmission cores 1 to 7, are optically coupled by the optical input/output devices 11 and 12. Further, the optical input/output from each of transmission cores of the optical input/output devices 11 and 12 are optically coupled to each other by the single-mode fiber 13. That is, the optical input/output devices 11 and 12 and the single-mode fiber 13 cooperate to function as a multicore fiber optical path junction.

For example, in the sensing coil mechanism 10A, the clockwise light guided to the optical input/output device 11 is optically coupled to the transmission core 2 of the multicore fiber 14 by the optical input/output device 11 and travels in the sensing coil 15. At this time, the counterclockwise light guided to the optical input/output device 12 is optically coupled to the transmission core 3 of the multicore fiber 14 by the optical input/output device 12 and travels in the sensing coil 15.

As in this example, in the sensing coil mechanism 10A, the clockwise light and the counterclockwise light travel in the adjacent transmission cores 2 and 3, the spatial distributions of the respective temperature change rates are approximated even if the temperature of the multicore fiber 14 changes because the transmission core 2 and the transmission core 3 are close to each other, and the respective phase changes of the clockwise light and the counterclockwise light become extremely small. As a result, the gyro output is less likely to fluctuate even if the temperature of the multicore fiber 14 changes. The same effect can be achieved by optically coupling the counterclockwise light to the transmission core 7 instead of optically coupling the counterclockwise light to the transmission core 3.

Note that in the optical input/output devices 11 and 12, a means that is capable of changing the traveling path of the light by an optical mechanism using a lens, a prism, or the like is utilized, as in the example disclosed in Japanese Patent No. 5870426, for example.

An operation of the sensing coil mechanism 10A according to this embodiment will be specifically described.

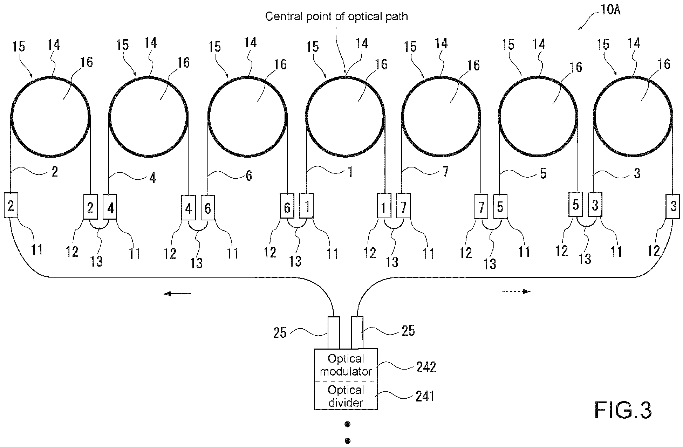

Fig. 3 is a schematic diagram of a virtual optical system showing a state where light is transmitted in the sensing coil in this embodiment.

Fig. 3 shows an example where light passes through all of the odd-number of (seven) transmission cores 1 to 7. In the sensing coil mechanism 10A, at least two transmission cores, of the plurality of transmission cores 1 to 7, are optically coupled by the optical input/output devices 11 and 12. The optical input/output from an arbitrary transmission core of the optical input/output device and the optical input/output from another arbitrary transmission core are optically coupled to each other by the single-mode fiber 13 to form one optical path. For example, in the sensing coil mechanism 10A, each of the transmission cores 1 to 7 is connected to one of the plurality of single-mode fibers 13 by the optical input/output devices 11 and 12, and thus, all the transmission cores 1 to 7 are optically coupled to form one optical path.

For example, the light is divided into the clockwise light and the counterclockwise light by the optical divider 241, and then each of them is phase-modulated by the optical modulator 242 and unpolarized by the depolarizer 25.

For example, the clockwise light (solid arrow) is guided to a second input/output port of the optical input/output device 11 and is optically coupled to the transmission core 2 of the multicore fiber 14. After that, the clockwise light is guided to a second input/output port of the optical input/output device 12. The clockwise light output from the second input/output port of the optical input/output device 12 is guided by the single-mode fiber 13, optically coupled to a fourth input/output port of the optical input/output device 11, and optically coupled to the transmission core 4 of the multicore fiber 14. After that, the clockwise light is guided to a fourth input/output port of the optical input/output device 12. The clockwise light output from the fourth input/output port of the optical input/output device 12 is guided by the single-mode fiber 13 and optically coupled to a sixth input/output port of the optical input/output device 11.

After that, the clockwise light travels to the transmission core 6, a sixth input/output port of the optical input/output device 12, the single-mode fiber 13, a first input/output port of the optical input/output device 11, the transmission core 1, a first input/output port of the optical input/output device 12, the single-mode fiber 13, a seventh input/output port of the optical input/output device 11, the transmission core 7, a seventh input/output port of the optical input/output device 12, the single-mode fiber 13, a fifth input/output port of the optical input/output device 11, the transmission core 5, a fifth input/output port of the optical input/output device 12, the single-mode fiber 13, a third input/output port of the optical input/output device 11, and the transmission core 3 in the stated order, and is finally output from a third input/output port of the optical input/output device 12.

Meanwhile, the counterclockwise light (dashed arrow) is guided to the third input/output port of the optical input/output device 12 and optically coupled to the transmission core 3 of the multicore fiber 14. After that, the counterclockwise light is guided to the third input/output port of the optical input/output device 11. The counterclockwise light output from the third input/output port of the optical input/output device 11 is guided by the single-mode fiber 13, optically coupled to the fifth input/output port of the optical input/output device 12, and optically coupled to the transmission core 5 of the multicore fiber 14. After that, the counterclockwise light is guided to the fifth input/output port of the optical input/output device 11. The counterclockwise light output from the fifth input/output port of the optical input/output device 11 is guided by the single-mode fiber 13 and optically coupled to the seventh input/output port of the optical input/output device 12.

After that, the counterclockwise light travels to the transmission core 7, the seventh input/output port of the optical input/output device 11, the single-mode fiber 13, the first input/output port of the optical input/output device 12, the transmission core 1, the first input/output port of the optical input/output device 11, the single-mode fiber 13, the sixth input/output port of the optical input/output device 12, the transmission core 6, the sixth input/output port of the optical input/output device 11, the single-mode fiber 13, the fourth input/output port of the optical input/output device 12, the transmission core 4, the fourth input/output port of the optical input/output device 11, the single-mode fiber 13, the second input/output port of the optical input/output device 12, and the transmission core 2 in the stated order, and is finally output from a second input/output port of the optical input/output device 11.

The counterclockwise light output from the second input/output port of the optical input/output device 11 and the clockwise light output from the third input/output port of the optical input/output device 12 are unpolarized by the depolarizer 25, then phase modulated by the optical modulator 242, and superimposed by the optical divider 241 to interfere with each other.

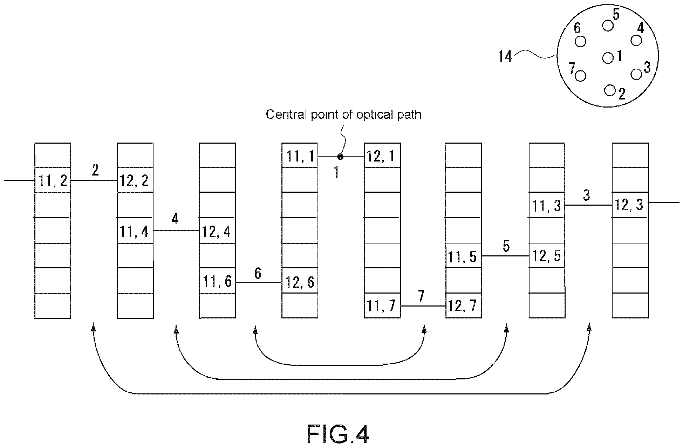

Fig. 4 is a schematic diagram of a virtual optical system showing combinations of adjacent transmission cores in the sensing coil shown in Fig. 3.

The numerical numbers arranged in the frames shown in Fig. 4, e.g., the leftmost numerical numbers (11, 2), refer to the "second" I/O port of the optical input/output device "11". As shown in Fig. 4, the centrally disposed transmission core 1, of the plurality of transmission cores 1 to 7, is located at the center of the optical path in the sensing coil mechanism 10A. Further, the central point in the transmission core 1 divides the length of the optical path by two. In other words, the central point of the optical path is in the transmission core 1. The combinations of adjacent transmission cores equidistant from this central point are the transmission core 6 and the transmission core 7, the transmission core 4 and the transmission core 5, and the transmission core 2 and the transmission core 3 (combinations of two-way arrows). Note that the transmission core 1 is adjacent to all of the other transmission cores 2 to 7.

In other words, the transmission core located at a predetermined distance along the optical path in the clockwise direction from the central point of the optical path and the transmission core located at the same distance as the predetermined distance along the optical path in the counterclockwise direction are adjacent to each other in the multicore fiber 14. That is, in the sensing coil mechanism 10A, the clockwise light and the counterclockwise light are configured to pass through the adjacent transmission cores in opposite directions.

In some existing interferometric optical fiber gyroscopes, a single-mode fiber is wound in a coil shape as a sensing coil. In such an interferometric optical fiber gyroscope, since the single-mode fiber includes only one transmission core, the total length of the single-mode fiber is equal to the optical path length.

In such an interferometric optical fiber gyroscope, there is a method of increasing the length of the single-mode fiber in order to increase the sensitivity of angular velocity. Further, in such an interferometric optical fiber gyroscope, there is a method of symmetrically winding the single-mode fiber with respect to the center of the optical path length in order to suppress fluctuation (Shupe effect) of gyroscopic output caused by changes in the temperature of the single-mode fiber. In this case, the single-mode fiber is wound symmetrically so that transmission cores at the same distance as seen from the center of the optical path length have the same temperature change rate.

However, the task of winding a long fiber into a bobbin takes a lot of time. In addition, the task of winding a long fiber symmetrically with respect to the center of the optical path takes even more time and effort. Therefore, the interferometric optical fiber gyroscope produced by such a method is expensive.

Further, in the case where the single-mode fiber is used, since the distance between adjacent transmission cores cannot be made smaller than the diameter (e.g., 165 µm in diameter) of the resin layer covering the transmission cores, limitations arise in making the distance between the transmission core in which the counterclockwise light travels and the transmission core in which the clockwise light travels closer. Therefore, even if the transmission cores are made adjacent to each other, the spatial distributions of the respective temperature change rates are not approximated, and there is a limitation in suppressing the fluctuation of the gyro output due to the temperature change.

Meanwhile, in this embodiment, by using the multicore fiber 14 including the plurality of transmission cores 1 to 7, the length obtained by multiplying the length of the multicore fiber 14 by the number of transmission cores becomes the length of the substantial sensing coil 15. Therefore, in order to obtain the same optical path length as that of a sensing coil including only a single-mode fiber, it only needs to use the multicore fiber 14 having the length of 1/(the number of transmission cores) of the length of a sensing coil including only a single-mode fiber, and the winding operation for forming the sensing coil 15 is greatly simplified.

Further, in this embodiment, even if the multicore fiber 14 is not wound symmetrically with respect to the center of the optical path length, the clockwise light and the counterclockwise light pass through the adjacent transmission cores in the sensing coil mechanism 10A.

As a result, the distance between the transmission core in which the counterclockwise light travels and the transmission core in which the clockwise light travels is made closer, and the spatial distributions of the respective temperature change rates are approximated. As a result, even if a temperature change occurs in the sensing coil 15, the fluctuation of the gyro output is suppressed, and it is possible to detect angular velocity with high accuracy.

In particular, in the multicore fiber 14, the distance between the adjacent transmission cores is, for example, 50 µm or less. As an example, the distance is 45 µm, but not limited to this numerical value. With such a short interval, the distance between the transmission core in which the counterclockwise light travels and the transmission core in which the clockwise light travels is made closer, and the spatial distributions of the respective temperature change rates are more approximated.

### (Modified example 1)

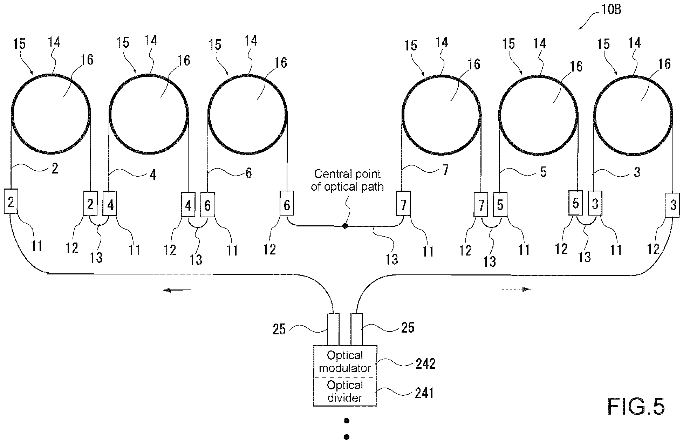

Fig. 5 is a schematic diagram of a virtual optical system showing another state where light is transmitted in a sensing coil in this embodiment.

In a sensing coil mechanism 10B shown in Fig. 5, the transmission core 1 centrally disposed in the multicore fiber 14 is not used as the optical path, but the even number of transmission cores 2 to 7 are used as the optical path in the multicore fiber 14. In the sensing coil mechanism 10B, an optical path is formed by the even number of transmission cores 2 to 7. Note that the transmission core 1 may be removed from the multicore fiber 14.

In the sensing coil mechanism 10B, the central point of the optical path is not present in the sensing coil 15, and the central point is in the single-mode fiber 13 that optically couples the seventh input/output port of the optical input/output device 11 and the sixth input/output port of the optical input/output device 12 to each other. The combinations of adjacent transmission cores are similar to those in the sensing coil mechanism 10A.

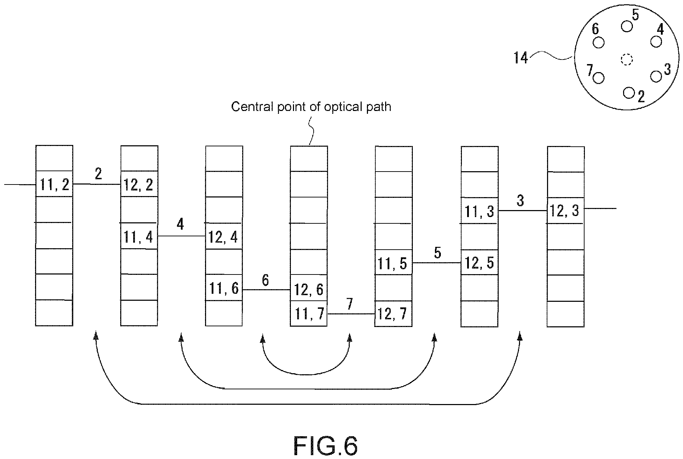

For example, Fig. 6 is a schematic diagram of a virtual optical system showing combinations of adjacent transmission cores in the sensing coil shown in Fig. 5.

The combinations of the adjacent transmission cores at equal distances from the central point of the optical path are the transmission core 6 and the transmission core 7, the transmission core 4 and the transmission core 5, and the transmission core 2 and the transmission core 3.

Even in such a sensing coil mechanism 10B, the same effects as those of the sensing coil mechanism 10A can be achieved. In particular, in the sensing coil mechanism 10B, since the transmission core 1 centrally located in the multicore fiber 14 is not used, the clockwise light and the counterclockwise light constantly pass through the adjacent transmission cores, the fluctuation of the gyro output is further suppressed, and angular velocity can be detected with higher accuracy.

### (Modified example 2)

The multicore fiber 14 may be wound in a coil shape around the bobbin 16 so as to be symmetrical with respect to the central point of the optical path. By performing such symmetric winding, two symmetries of the spatial proximity between the multicore fibers 14 as well as the spatial proximity between the adjacent transmission cores are given to the sensing coil mechanism, and angular velocity can be measured with higher accuracy.

Although embodiments of the present invention have been described above, it goes without saying that the present invention is not limited to the above-mentioned embodiments and various modifications can be made. Further, each embodiment is not limited to an independent form, and can be combined as much as technologically possible. Reference Signs List

- 1 to 7: transmission core
- 10A, 10B: sensing coil mechanism
- 11, 12: optical input/output device
- 13: single-mode fiber
- 14: multicore fiber
- 15: sensing coil
- 16: bobbin
- 21: light source
- 22: optical coupler
- 23: polarizer
- 241: optical divider
- 242: optical modulator
- 25: depolarizer
- 26: optical receiver
- 31: signal processing circuit
- 100: interferometric optical fiber gyroscope

## Claims

1. An interferometric optical fiber gyroscope that detects angular velocity by optical interference between counterclockwise light and clockwise light, the interferometric optical fiber gyroscope comprising:
a sensing coil mechanism including a multicore fiber that includes a plurality of transmission cores, and a multicore fiber optical path junction that optically couples at least a first transmission core and a second transmission core, of the plurality of transmission cores, to form one optical path.

2. The interferometric optical fiber gyroscope according to claim 1, wherein
the multicore fiber optical path junction includes an optical input/output device that optically couples the first transmission core and the second transmission core, and a single-mode fiber that couples optical input/output from the first transmission core of the optical input/output device and optical input/output from the second transmission core to each other to form one optical path.

3. An interferometric optical fiber gyroscope that detects angular velocity by optical interference between counterclockwise light and clockwise light, the interferometric optical fiber gyroscope comprising:
a light source;
a first optical divider that divides light emitted from the light source;
a polarizer that makes the light divided by the first optical divider single-polarized;
a second optical divider that divides the light that has been made single-polarized by the polarizer into two light beams;
an optical modulator that modulates a phase of each of the light beams divided by the second optical divider;
a sensing coil mechanism that includes a multicore fiber including a plurality of transmission cores, and an optical input/output device that optically couples arbitrary transmission cores of the multicore fiber to each other, the multicore fiber and the optical input/output device forming one optical path, the light beams whose phases have been modulated by the optical modulator traveling in opposite directions in the optical path as counterclockwise light and clockwise light; and
an optical receiver that receives light obtained by optical interference via the second optical divider between the counterclockwise light emitted from the sensing coil mechanism and the clockwise light emitted from the sensing coil mechanism.

4. The interferometric optical fiber gyroscope according to any one of claims 1 to 3, wherein
a transmission core at a first distance along the optical path in a clockwise direction from a central point of the optical path for dividing a length of the optical path by two and a transmission core at the first distance along the optical path in a counterclockwise direction from the central point are adjacent to each other in the multicore fiber.

5. The interferometric optical fiber gyroscope according to any one of claims 1 to 4, wherein
the plurality of transmission cores includes a central core located at a center of the multicore fiber and an even number of peripheral cores disposed around the central core, and
a central point of the optical path is in the center core.

6. The interferometric optical fiber gyroscope according to any one of claims 1 to 4, wherein
the plurality of transmission cores includes an even number of cores, and
the optical path is formed by the even number of cores.

7. The interferometric optical fiber gyroscope according to any one of claims 1 to 6, wherein
the multicore fiber is wound in a coil shape so as to be symmetrical with respect to a central point of the optical path.

8. The interferometric optical fiber gyroscope according to any one of claims 1 to 7, wherein
the second optical divider, the polarizer, and the optical modulator are integrated on one substrate, and an optical integrated circuit is formed on the substrate.

9. A sensing coil mechanism incorporated in an interferometric optical fiber gyroscope that detects angular velocity by optical interference between counterclockwise light and clockwise light, the sensing coil mechanism comprising:
a multicore fiber that includes a plurality of transmission cores; and
a multicore fiber optical path junction that optically couples at least a first transmission core and a second transmission core, of the plurality of transmission cores, to form one optical path.
